# EUROPÄISCHE PATENTANMELDUNG

(11) **EP 2 890 019 A1**
(43) Veröffentlichungstag der Anmeldung: **01.07.2015**
(21) Anmeldenummer: 14198151.4
(22) Anmeldetag: 16.12.2014
(51) Int. Cl.: H04B 1/3827, H04M 1/725

(54) **SMARTPHONE APP DURCH WELCHE DIE STRAHLUNGSLEISTUNG DES SMARTPHONES VERMINDERT WIRD**

(30) Priorität: 24.12.2013 ES 201301198
(71) Anmelder: Televés, S.A., 15706 Santiago de Compostela (ES)
(72) Erfinder: Ramos Garcia, Manuel, 15706 Santiago de Compostela (ES)
(74) Vertreter: Dosterschill, Peter

(57) **Zusammenfassung**

Die Erfindung betrifft ein Verfahren zur Steuerung einer mobilen Datenverarbeitungseinrichtung (11), insbesondere eines Smart-Telefons. Sogenannte Smart-Geräte wie die aktuellen Mobiltelefone, Computer-Tablets und andere tragbare Rechner haben das Kommunikationsverhalten der Menschen revolutioniert, aber hierzu werden elektromagnetische Felder benötigt, die mit für die entsprechenden Aufgaben erforderlichen Sendepegeln arbeiten, die die menschliche Gesundheit beeinflussen können. Der Erfindung liegt die Aufgabe zugrunde, ein Verfahren zu schaffen, das den Schutz für Benutzer mobiler Datenverarbeitungsgeräte vor Strahlungsleistungen vergrößert. Mittels der von dem Erfinder entwickelten App wird die Sendeleistung der Schnittstelle WiFi und anderer Schnittstellen wie beispielsweise Bluetooth, NFC, usw. gesteuert. Insbesondere werden während Fernsprechverbindungen durchgeführt werden, nicht benötigte Komponenten wie WiFi, Bluetooth oder NFC Radio-Empfänger deaktiviert.

## Beschreibung

Die vorliegende Erfindung betrifft ein Verfahren zur Steuerung einer mobilen Datenverarbeitungseinrichtung nach dem Oberbegriff des Patentanspruchs 1.

Heutzutage sind drahtlose Geräte, wie Mobiltelefone allgegenwärtig im Alltag der meisten Menschen, einschließlich Kinder, wobei die Kinder immer jünger werden, wenn sie erstmals diese Geräte beziehungsweise diese Technologien nutzen. Sogenannte Smart-Geräte wie die aktuellen Mobiltelefone, Computer-Tablets und andere tragbare Rechner haben das Kommunikationsverhalten der Menschen revolutioniert, aber hierzu werden elektromagnetische Felder benötigt, die mit für die entsprechenden Aufgaben erforderlichen Sendepegeln arbeiten, die die menschliche Gesundheit beeinflussen können.

Die Wirkungen der von diesen Vorrichtungen über längere Zeitraume abgegebenen und empfangenen elektromagnetischen Felder motivieren die Gemeinschaft der Experten, einzelne Vorsichtsmaßnahmen zu empfehlen, die im Wesentlichen darauf gerichtet sind, die von einem Mobilgerät direkt abgegebene Strahlungsleistung zu reduzieren. Hierzu gehört, dass die Leistungen, die von einem von einem Benutzer bedienten Mobilgerät abgegeben werden, begrenzt werden (Low power).

Zur Zeit ist Anwendungssoftware, insbesondere in Form sogenannter Apps (http:// de.wikipedia.org/wiki/App; http://de.wikipedia.org/wiki/Mobile_App) bekannt, die dafür bestimmt ist, die Benutzer von Endgeräten, die mit Drahtlosnetzen (WIFI, Bluetooth, NFC, usw.) verbunden sind, in einem nur geringeren Umfang dieser Strahlung auszusetzen. Hierzu gehört die App TAKWON, die eine Warnung abgibt, wenn die Strahlungspegel des Mobiltelefons zu stark ansteigen, siehe US 2013/0196723 A1, oder die App CANCERBLOCK, die die Schnittstellen WiFi, GPS und Bluetooth abschalten, womit auf diese Weise die möglichen Wirkungen einer längeren Nutzung der Mobilgeräte reduziert werden.

Der Erfindung liegt die Aufgabe zugrunde, ein Verfahren der eingangs genannten Art zu schaffen, das den Schutz für Benutzer mobiler Datenverarbeitungsgeräte vor Strahlungsleistungen vergrößert.

Diese Aufgabe wird durch ein Verfahren gelöst, das in den Patentansprüchen definiert ist.

Mit der Erfindung wird eine Vielzahl von Vorteilen erzielt.

Die erfindungsgemäße Verfahren betrifft eine Datenverarbeitungseinrichtung, die erste Komponenten zur Durchführung von Fernsprechverbindungen und zweite Komponenten zur Durchführung nicht-fernsprechverbindungsbezogener Aufgaben, aufweist, sowie eine Steuereinheit und eine Einheit, in der Sendeenergie zur Übertragung von Signalen gespeichert ist. Das Verfahren ist dadurch gekennzeichnet, dass der Steuereinheit ein Steuerungsprogramm zur Steuerung von Fernsprechverbindungen zugeordnet ist, das das Verfahren definiert, mit dem die Steuereinheit die zweiten Komponenten in Zeiten deaktiviert, in denen eine Fernsprechverbindung durchgeführt wird.

Damit wird der Vorteil erzielt, dass Benutzer mobiler Datenverarbeitungseinrichtungen, insbesondere von Smart-Telefonen, genau in denjenigen Zeiten vor potentiell gesundheitsschädlicher Strahlung geschützt werden, in denen eine Fernsprechverbindung geführt wird und die Benutzer ihr Telefongerät nahe am Ohr und damit nahe am Kopf halten.

Mittels der von dem Erfinder entwickelten App wird die Sendeleistung der Schnittstelle WiFi und anderer Schnittstellen wie beispielsweise Bluetooth, NFC, usw. gesteuert.

Ein weiteres vorteilhaftes Ausführungsbeispiel des erfindungsgemäßen Verfahrens ist dadurch gekennzeichnet, dass die Steuereinheit wenigstens einen Teil der zweiten Komponenten re-aktiviert, nachdem die Fernsprechverbindung beendet worden ist. Damit werden die Benutzer zum einen vor potentiell gesundheitsschädlicher Strahlung geschützt und zum anderen werden ihnen die Funktionen ihrer Smart-Telefongeräte unmittelbar nach einer Fernsprechverbindung wieder zur Verfügung gestellt.

Ein weiteres vorteilhaftes Ausführungsbeispiel des erfindungsgemäßen Verfahrens ist dadurch gekennzeichnet, dass die Steuereinheit die zweiten Komponenten entsprechend erster Steuersignale steuert, die in die Datenverarbeitungseinrichtung eingegeben werden, und/oder entsprechend zweiter Steuersignale, die in die Datenverarbeitungseinrichtung eingegeben werden. Die ersten Steuersignale bezeichnen wenigstens eine nicht-fernsprechverbindungsbezogene Aufgabe und/oder wenigstens eine zweite Komponente, während die zweiten Steuersignale wenigstens eine Prozentangabe, insbesondere 25%, 50% oder 75, einer gegebenen Sendeleistung bezeichnen, um dementsprechend die Sendeleistung zu reduzieren, soweit dies für einen störungsfreien Betrieb möglich ist.
Damit wird den Benutzern eine Mehrzahl alternativer Möglichkeiten zur Verfügung gestellt, potentiell gesundheitsschädliche Strahlung zu reduzieren.

Damit wird zum einen den in unterschiedlichen Regionen beziehungsweise in unterschiedlichen Ländern möglicherweise rechtlich unterschiedlichen Situationen gefolgt und zum anderen erweist sich die Konfiguration der jeweiligen Strahlungsleistung in vorteilhafter Weise als uneingeschränkt transparent.

Weitere vorteilhafte Ausführungsbeispiele des erfindungsgemäßen Verfahrens sind dadurch gekennzeichnet, dass einerseits Zeitpunkte und/oder Zeitintervalle vorgegeben werden, in denen die Schnittstellen deaktiviert werden.
In vorteilhafter Weise wird der normale Betrieb der Sprachkommunikation nicht beeinflusst.

Ein weiteres vorteilhaftes Ausführungsbeispiel des erfindungsgemäßen Verfahrens ist dadurch gekennzeichnet, dass das Verfahren die folgenden Schritte aufweist:
1. Konfiguration der mobilen Datenverarbeitungseinrichtung;
2. Parametrierung der Strahlungsleistung;
3. Abfrage, ob eine Fernsprechverbindung begonnen wurde;
4. Zu Beginn einer Fernsprechverbindung Deaktivieren nicht-fernsprechverbindungsbezogener Komponenten der Datenverarbeitungseinrichtung, insbesondere der entsprechenden Schnittstellen
5. Abfrage, ob die Fernsprechverbindung beendet wurde;
6. Nach der Beendigung einer Fernsprechverbindung Aktivieren der nicht-fernsprechverbindungsbezogenen Komponenten der Datenverarbeitungseinrichtung, insbesondere der entsprechenden Schnittstellen.

Das Verfahren weist damit in vorteilhafter Weise nur vergleichsweise wenige Schritte auf und erzielt mit dieser nur geringen Anzahl von Verfahrensschritten die gewünschten Wirkungen, nämlich die Reduzierung der Strahlungsleistung im Dienste der Gesundheit des Benutzers und die Reduzierung der Betriebskosten für den Benutzer.

Im Folgenden werden Ausführungsbeispiele anhand der folgenden Figuren beschrieben.
Es zeigt
- Figur 1: ein Blockschaltbild eines Teils einer mobilen Daten-verarbeitungseinrichtung nach dem Stand der Technik;
- Figuren 2a und 2 b: zwei Funktions-Blockschaltbilder eines Mobilgeräts gemäß der Erfindung; und
- Figur 3: ein Flussdiagramm des Verfahrens gemäß der Erfindung.

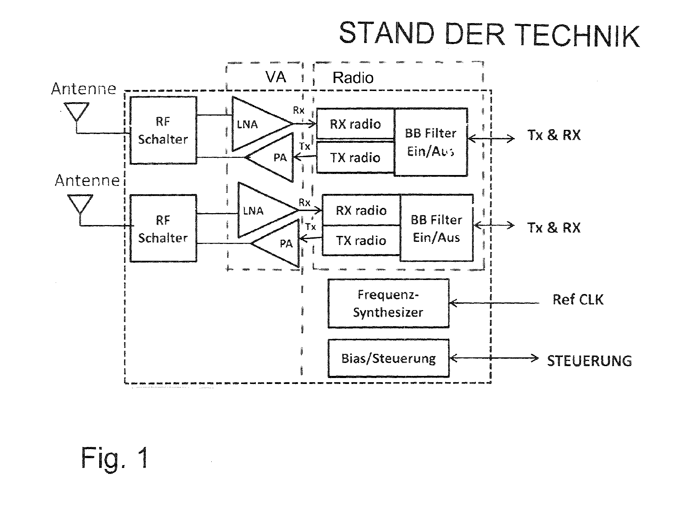

Die in Figur 1 in Form eines Blockschaltbildes dargestellte mobile beziehungsweise tragbare Datenverarbeitungseinrichtung, insbesondere eines Smart-Mobiltelefons weist eine Antenne für das Senden von Daten und eine Antenne für das Empfangen von Daten auf. Die Anzahl der Sendeantennen hängt von der Sendetechnologie ab. Die Anzahl der Antennen wird üblicherweise mit "n x m" angegeben, wobei "n" die Anzahl der Sendeantennen und "m" die Anzahl der Empfangsantennen bezeichnet. Beispielsweise bezeichnet in der Abkürzung "2x2 MIMO" die erste Zahl 2 genau 2 Sendeantennen und die zweite Zahl 2 bezeichnet genau 2 Empfangsantennen; dies entspricht dem Minimum im Entwurf 2.0 des Standards 802.11n. Dementsprechend bezeichnet "2x3 MIMO" 2 Sendeantennen und 3 Empfangsantennen.

Eine Verstärkeranordnung VA besteht im Wesentlichen aus Leistungsverstärkern PA (Power Amplifier) für das Senden von Signalen und aus rauscharmen Verstärkern LNA (Low Noise Amplifier) für den Empfang von Signalen.
Im Allgemeinen werden für Smart-Telefone sogenannte Front-End-Einheiten mit hohem Gewinn verwendet. In Figur 1 sind Radio-Schalter (RF-Schalter) dargestellt, mit denen zwischen einem Senden und Empfangen eines Kanals bezüglich genau einer Antenne umgeschaltet wird. In Systemen mit nur einer Antenne, die für Senden und Empfangen ausgestaltet ist, entfällt ein solcher Schalter.

Ein Block RADIO (MAC Medium Access Control) stellt eine Schnittstelle dar und besteht aus Schaltungen, die die Modulation zu sendender Signale und die Demodulation empfangener Signale durchführen.

Busse Tx&RX verbinden den Block RADIO und einen in der Figur nicht dargestellten Host oder Prozessor des Smart-Mobiltelefons. Diese Busse können beispielsweise unter anderem ein SDIO (Secure Digital Input Output), PCI (Peripheral Component Interconnect), SPI (Serial Peripheral Interface) sein. Dabei handelt es sich um Busse, über die Nutzsignale übertragen werden und in einigen Fällen Informationen, die die eigentliche Konfiguration und die Parametrierung der Schnittstelle RADIO betreffen.

Ein Block Bias/Steuerung steuert die Konfiguration und Parametrierung der Schnittstelle RADIO sowie die Verstärkung der Verstärkeranordnung VA, um die Sendeleistung zu steuern. Der mit diesem Block RADIO verbundene Bus STEUERUNG ist beispielsweise ein I2C (Inter-Integrated Circuit), UART (Universal Asynchronous Receiver-Transmitter).
Der Block Frequenzsynthesizer, an den ein Bus Ref CLK angeschlossen ist, implementiert notwendige Uhrsignale für den Betrieb der Schnittstelle RADIO.

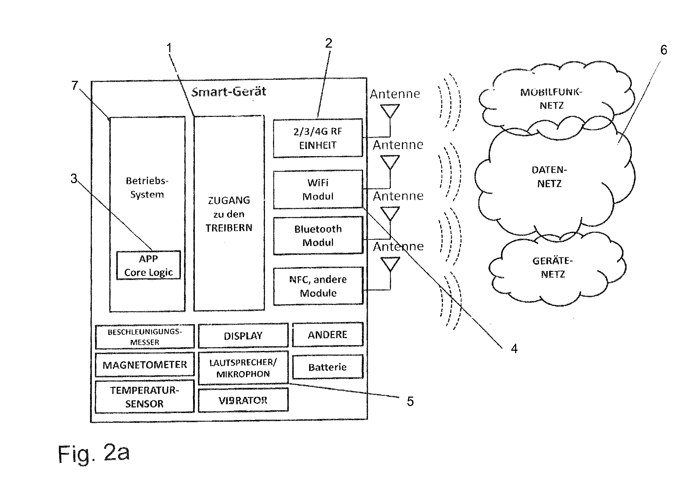

In Figur 2a ist eine mit "Smart-Gerät" bezeichnete mobile Datenverarbeitungseinrichtung mit vier Antennen dargestellt.

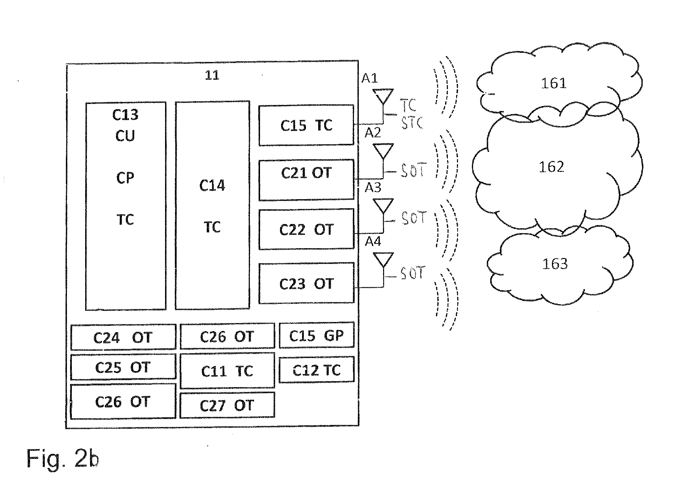

Das Betriebssystem 7 des Smart-Geräts greift auf bekannte Treiber 1 zu. Der Zugriff erfolgt mittels Steuersignale, die ermöglichen, die Schnittstellen 4 beziehungsweise zweite Komponenten (C21, C21 in Figur 2b) zu deaktivieren oder die Strahlungsleistung zu konfigurieren.

Die Schnittstellen stehen in Verbindung mit einem Mobilfunk-Netz, einem Datennetz und/oder einem Geräte-Netz 6.

Das erfindungsgemäße Verfahren kann in Form einer Applikation ("App") implementiert werden. Mittels APP Core Logic 3 wird auf die Treiber 1 im Betriebssystem 7 zugegriffen. Mittels Steuersignale werden nicht-fernsprechverbindungsbezogene "zweite" Komponenten (C21, C222, ... Figur 2b), zu den unter anderem nicht-fernsprechverbindungsbezogene Schnittstellen gehören, deaktiviert oder aktiviert und die Sendeleistung gesteuert. Das in Figur 2a dargestellte Smart-Gerät enthält unter anderem Komponenten wie beispielsweise Beschleunigungsmesser, Magnetomesser, Temperatursensor, Display; diese und andere Komponenten sind für die Durchführung einer Fernsprechverbindung nicht erforderlich und werden im Rahmen des erfindungsgemäßen Verfahrens im Zusammenhang mit einer Fernsprechverbindung deaktiviert und re-aktiviert.

Figur 2b zeigt eine erfindungsgemäße Datenverarbeitungseinrichtung 11, insbesondere ein Smart-Telefon in Form eines Blockschaltbildes. Diese steht in einer Verbindung mit einem Mobiltelefon-Netz 161, einem Datennetz 162 und/oder mit einem Gerätenetz 163.
Die Datenverarbeitungseinrichtung 11 weist erste Komponenten C11, C12, ... zur Durchführung von Fernsprechverbindungen TC und zweite Komponenten C21, C22, ... zur Durchführung anderer Aufgaben OT auf.

Diese anderen Aufgaben OT sind nicht-fernsprechverbindungsbezogene Aufgaben OT. Hierzu gehört das Senden von nicht-fernsprechverbindungsbezogenen Signalen, das Bearbeiten von nicht-fernsprechverbindungsbezogenen Daten, und/oder das Bestimmen aktueller Ortsinformationen der Datenverarbeitungseinrichtung 11.

In Figur 2b sind die ersten Komponenten C11, C12, C13, C14, C15 auch mit dem Bezugszeichen TC versehen, das eine Fernsprechverbindung TC bezeichnet, während die zweiten Komponenten C21, C22, C23, C24, C125, C26, C27 auch mit dem Bezugszeichen OT versehen sind, das eine andere Aufgabe OT bezeichnet. Die ersten Komponenten sind fernsprechverbindungsbezogene Komponenten, während die zweiten Komponenten nicht-fernsprechverbindungsbezogene Komponenten sind.

Die Anordnung der Komponenten in den Figuren 2a und 2b entsprechen einander, so entspricht die Einheit 2 "2/3/4G RF EINHEIT" oben rechts in Figur 2a der Einheit C15 TC oben rechts in Figur 2b; die darunter angeordnete Einheit 4 "WiFi Modul" der Figur 2a entspricht der Einheit C21 OT in Figur 2b, und so weiter.

Weiterhin weist die Datenverarbeitungsvorrichtung 11 Antennen A1, ..., A4 auf, über die im Rahmen einer Fernsprechverbindung TC fernsprechverbindungsbezogene Signale STC gesendet werden, beziehungsweise nicht-fernsprechverbindungsbezogene Signale SOT zur Durchführung nicht-fernsprechverbindungsbezogener Aufgaben OT.

Die Datenverarbeitungsvorrichtung 11 weist auch eine Steuereinheit CU und eine Einheit GP auf, in der unter anderem die Energie (Sendeenergie RP) gespeichert ist, die für die Übertragung der Signale erforderlich ist. Diese Signale sind beispielweise die fernsprechverbindungsbezogenen Signale STC und die nicht-fernsprechverbindungsbezogenen Signale SOT.

Der Steuereinheit CU ist ein Steuerungsprogramm CP zur Steuerung von Fernsprechverbindungen zugeordnet, wobei das Steuerungsprogramm CP das Verfahren definiert, mit dem die Steuerungseinheit CU die zweiten Komponenten C21, C22, ... in Zeiten deaktiviert, in denen eine Fernsprechverbindung TC durchgeführt wird. Dieses Verfahren umfasst auch den Schritt, dass die Steuereinheit CU wenigstens einen Teil der zweiten Komponenten C21, C22, ... in Zeiten, in denen keine Fernsprechverbindung TC durchgeführt wird, aktiviert beziehungsweise re-aktiviert. Insbesondere erfolgt eine solche Re-Aktivierung unmittelbar, nachdem eine Fernsprechverbindung TC beendet ist.

In die Datenverarbeitungseinrichtung 11 sind über eine entsprechende Eingabeeinrichtung Steuersignale eingebbar, insbesondere erste Steuersignale CS1, zweite Steuersignale CS2 und/oder dritte Steuersignale CS3.
Die ersten Steuersignale CS1 bezeichnen wenigstens eine nicht-fernsprechverbindungsbezogene Aufgabe OT und/oder wenigstens eine zweite Komponente C21, C22, ...; die zweiten Steuersignale CS2 bezeichnen wenigstens eine Prozentangabe, insbesondere 25%, 50%, 75% oder eine beliebige Prozentzahl einer gegebenen Sendeleistung (zum Beispiel: maximal rechtlich zulässige Strahlungsleistung (CNAF, FCC)) und die dritten Steuersignale CS3 bezeichnen einen Zeitpunkt oder einen Zeitraum, zu dem die Steuereinheit CP die zweite Komponenten C21, C22, ... deaktiviert und/oder re-aktiviert. Die Steuereinheit CU steuert das Datenverarbeitungseinrichtung 11 entsprechend der Steuersignale CS1, CS2 und CS3.

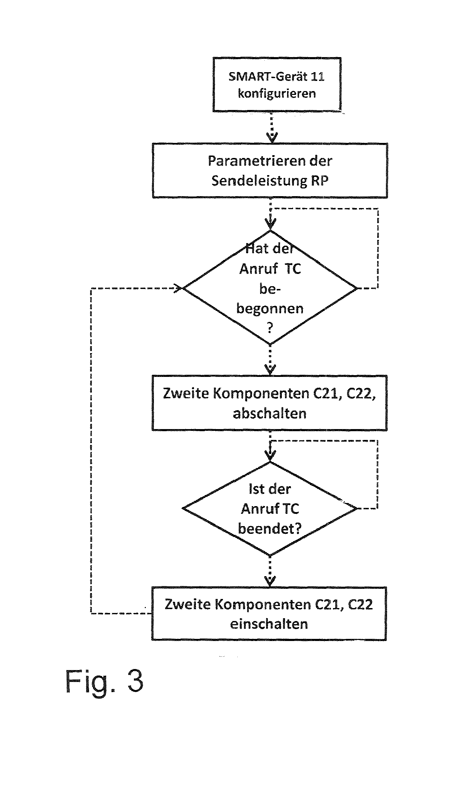

Wie in Figur 3 dargestellt, führt das Betriebssystem 7 (Figur 2A) beziehungsweise die Steuereinheit CU (C13 CU TC in Figur 2B) folgende Verfahrensschritte durch:
- Konfiguration der mobilen Datenverarbeitungseinrichtung 11;
- Parametrierung der Sendeleistung RP;
- Abfrage, ob eine Fernsprechverbindung TC begonnen wurde;
- Nach dem Beginn einer Fernsprechverbindung TC Deaktivieren der Schnittstellen beziehungsweise der zweiten Komponenten C21, C22, ...
- Abfrage, ob die Fernsprechverbindung TC beendet wurde; und
- Nach der Beendigung einer Fernsprechverbindung TC Aktivieren der Schnittstellen beziehungsweise der zweiten Komponenten C21, C22, ...

Im Ergebnis definiert das Steuerungsprogramm CP ein Verfahren, mit dem die Steuereinheit CU die zweiten Komponenten C21, C22, ... in Zeiten deaktiviert, in denen eine Fernsprechverbindung TC durchgeführt wird. Die Steuereinheit CU aktiviert wenigstens einen Teil der zweiten Komponenten C21, C22, ... in Zeiten, in denen keine Fernsprechverbindung TC durchgeführt wird. Insbesondere re-aktiviert die Steuereinheit wenigstens einen Teil der zweiten Komponenten C21, C22, nachdem eine Fernsprechverbindung TC beendet wird.

Mit dem Verfahren gemäß der Erfindung wird die Sendeleistung RP von Mobilgeräten 11 gesteuert, begrenzt und/oder deaktiviert.
Die Erfindung betrifft auch die in den Figuren 2a und 2b dargestellte Datenverarbeitungseinrichtung, die Ausführungsformen des in Figur 3 dargestellten Verfahrens durchführt.

Die Einrichtung 11 weist Schnittstellen 4 (Figur 2a) beziehungsweise Komponenten C11, C12, ...; C21, C22 (Figur 2b) und ein Betriebssystem 7 (Figur 2a) bzw. eine Steuereinheit CU (Figur 2b) auf, dem ein Softwareprogramm zugeordnet ist, mit dem das in Figur 3 in Form eines Flussdiagramms dargestellte Verfahren durchgeführt wird. Dieses umfasst die folgenden Schritte
- Konfiguration der mobilen Datenverarbeitungseinrichtung 11;
- Parametrierung der Strahlungsleistung RP;
- Abfrage, ob eine Fernsprechverbindung/Fernsprechverbindung TC begonnen wurde
   ("Hat die Verbindung TC begonnen?");
- Nach dem Beginn einer Fernsprechverbindung Deaktivieren der Schnittstellen 4 beziehungsweise der zweiten Komponenten,
- Abfrage, ob die Fernsprechverbindung beendet wurde;
   ("Ist die Verbindung beendet worden?"), und
- Nach der Beendigung einer Fernsprechverbindung Aktivieren der Schnittstellen 4 beziehungsweise der zweiten Komponenten.

### Bezugszeichen

- 1: Treiber
- 2: GSM-Schnittstelle
- 3: App
- 4: WLAN-Einheit
- 6: Mobilfunk-, Daten- und Gerätenetz
- 7: Betriebssystem
- VA: Verstärkeranordnung
- PA: Leistungsverstärker
- LNA: Rauscharme Verstärker

- 11: Datenverarbeitungseinrichtung, insbesondere mobile Datenverarbeitungseinrichtung, Smart-Telefon
- C11, C12, ...: Erste Komponenten von 11 zur Durchführung von Fernsprechverbindungen TC
- C21, ..., C27: Zweite Komponenten von 11 zur Durchführung anderer Aufgaben
- GP: Einheit, die Sendeenergie (RP) speichert
- RP: Sendeenergie, Sendeleistung

- TC: Fernsprechverbindung, Sprachverbindung
- STC: fernsprechverbindungsbezogenes Signal

- OT: nicht-fernsprechverbindungsbezogene Aufgabe
- SOT: nicht-fernsprechverbindungsbezogenes Signal
- CS1: erstes Steuersignal
- CS2: zweites Steuersignal
- SC3: drittes Steuersignal

- 161: Mobiltelefon-Netz
- 162: Datennetz
- 163: Gerätenetz

## Patentansprüche

1. Verfahren zur Steuerung einer mobilen Datenverarbeitungseinrichtung (11), insbesondere eines Smart-Telefons, welche aufweist
- erste Komponenten (C11, C12, ...).zur Durchführung von Fernsprechverbindungen (TC) und zweite Komponenten (C21, C22, ...) zur Durchführung nicht-fernsprechverbindungsbezogener Aufgaben (OT),
- eine Steuereinheit (CU), und
- eine Einheit (GP), in der Sendeenergie (RP) zur Übertragung von Signalen (STC, SOT) gespeichert ist,
**dadurch gekennzeichnet, dass**
- der Steuereinheit (CU) ein Steuerungsprogramm (CP) zur Steuerung von Fernsprechverbindungen (TC) zugeordnet ist, und
- das Steuerungsprogramm (CP) das Verfahren definiert, mit dem die Steuereinheit (CU) die zweiten Komponenten (C21, C22, ...) in Zeiten deaktiviert, in denen eine Fernsprechverbindung (TC) durchgeführt wird.

2. Verfahren nach Anspruch 1, **dadurch gekennzeichnet, dass**
- die Steuereinheit (CU) wenigstens einen Teil der zweiten Komponenten (C21, C22, ...) in Zeiten aktiviert, in denen keine Fernsprechverbindung (TC) durchgeführt wird.

3. Verfahren nach einem der vorstehenden Ansprüche, **dadurch gekennzeichnet, dass**
- die zweiten Komponenten (C21, C22, ...) die Aufgaben (OT) durchführen, die ein Senden von nicht-fernsprechverbindungsbezogenen Signalen betreffen, und/oder die ein Verarbeiten von nicht- fernsprechverbindungsbezogenen Daten betreffen, und/oder die eine Bestimmung aktueller Ortsinformationen der Datenverarbeitungseinrichtung (11) betreffen.

4. Verfahren nach einem der vorstehenden Ansprüche, dadurch gekenn zeichnet, dass
- die Steuereinheit (CU) die zweiten Komponenten (C21, C22, ...) entsprechend erster Steuersignale (CS1), die in die Datenverarbeitungseinrichtung (11) eingegeben werden, und/oder entsprechend zweiter Steuersignale (CS2), die in die Datenverarbeitungseinrichtung (11) eingegeben werden, steuert,
- die ersten Steuersignale (CS1) wenigstens eine nicht-fernsprechverbindungsbezogene Aufgabe (OT) und/oder wenigstens eine zweite Komponente (C21, C22, ...) bezeichnen, und die zweiten Steuersignale (CS2) wenigstens eine Prozentangabe, insbesondere 25%, 50% oder 75, einer gegebenen Sendeleistung bezeichnen.

5. Verfahren nach Anspruch 4, **dadurch gekennzeichnet, dass**
- die Steuereinheit (CU) die zweiten Komponenten (C21, C22, ...) entsprechend der ersten Steuersignale (CS1) und/oder entsprechend zweiter Steuersignale (CS2) und/oder entsprechend dritter Steuersignale (CS3), die in die Datenverarbeitungseinrichtung (11) eingegeben werden, steuert, und
die dritten Steuersignale (CS3) einen Zeitpunkt oder einen Zeitraum bezeichnen, zu dem die Steuereinheit (CP) zweite Komponente (C21, C22, ...) deaktiviert.

6. Verfahren nach einem der vorstehenden Ansprüche, dadurch gekenn zeichnet, dass es die folgenden Schritte aufweist
- Konfigurieren der Datenverarbeitungseinrichtung (11) hinsichtlich abzugebender Sendeenergie (RP);
- Parametrieren der Sendeleistung (RP);
- Deaktivieren der zweiten Komponenten (C21, C22, ...) in Zeiten, in denen eine Fernsprechverbindung (TC) durchgeführt wird, und
- Aktivieren zweiter Komponenten (C21, C22, ...) in Zeiten, in denen keine Fernsprechverbindung (TC) durchgeführt wird.

7. Verfahren nach Anspruch 6, **dadurch gekennzeichnet, dass** es den Schritt einer ersten Abfrage aufweist, ob eine Fernsprechverbindung (TC) aufgeaufgebaut wird, und/oder den Schritt einer zweiten Abfrage aufweist, ob eine Fernsprechverbindung (TC) beendet ist.

8. Datenverarbeitungseinrichtung (11), die aufweist
- erste Komponenten (C11, C12, ...) zur Durchführung von Fernsprechverbindungen (TC) und zweite Komponenten (C21, C22, ...) zur Durchführung nicht-fernsprechverbindungsbezogener Aufgaben (OT),
- eine Steuereinheit (CU), und
- eine Einheit (GP), in der Sendeenergie (RP) zur Übertragung von Signalen (STC, SOT) gespeichert ist,
**dadurch gekennzeichnet, dass**
- der Steuereinheit (CU) ein Steuerungsprogramm (CP) zur Steuerung von Fernsprechverbindungen (TC) zugeordnet ist, und
- das Steuerungsprogramm (CP) das Verfahren nach einem der Ansprüche 1 bis 7 definiert.
